(19) Europäisches Patentamt
European Patent Office
Office européen des brevets

(11) **EP 4 098 927 B1**

(12) **EUROPÄISCHE PATENTSCHRIFT**

(45) Veröffentlichungstag und Bekanntmachung des Hinweises auf die Patenterteilung:
**02.04.2025  Patentblatt 2025/14**

(21) Anmeldenummer: **21177329.6**

(22) Anmeldetag: **02.06.2021**

(51) Internationale Patentklassifikation (IPC):
**F16P 3/14** (2006.01)

(52) Gemeinsame Patentklassifikation (CPC):
**F16P 3/147; F16P 3/141; F16P 3/142; F16P 3/144**

(54) **SENSORANORDNUNG UND VERFAHREN ZUM BETRIEB EINER SENSORANORDNUNG**

SENSOR ASSEMBLY AND METHOD FOR OPERATING A SENSOR ASSEMBLY

AGENCEMENT DE CAPTEURS ET SON PROCÉDÉ DE FONCTIONNEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**07.12.2022  Patentblatt 2022/49**

(73) Patentinhaber: **Leuze electronic GmbH + Co. KG**
**73277 Owen/Teck (DE)**

(72) Erfinder:
• **Feller, Bernhard**
**86316 Friedberg (DE)**
• **Sanzi, Friedrich**
**73230 Kirchheim/Teck (DE)**
• **Quapil, Gerald**
**73277 Owen/Teck (DE)**

(74) Vertreter: **Ruckh, Rainer Gerhard**
**Patentanwaltskanzlei Ruckh**
**Jurastraße 1**
**73087 Bad Boll (DE)**

(56) Entgegenhaltungen:
**EP-A1- 1 418 380     DE-A1- 102017 218 917**

**Beschreibung**

Die Erfindung betrifft eine Sensoranordnung und ein Verfahren zum Betrieb einer Sensoranordnung.

Derartige Sensoranordnungen umfassen wenigstens einen Messwerte generierenden Sensor. Diese messenden Sensoren können beispielsweise von Flächendistanzsensoren, das heißt scannenden Distanzsensoren, oder auch Kamerasensoren ausgebildet sein.

Diese Sensoren können in unterschiedlichen industriellen Applikationen eingesetzt werden, wobei die Sensoren insbesondere Überwachungsfunktionen wahrnehmen, um Automatisierungsprozesse zu überwachen und kontrollieren. Die Funktionsweise eines derartigen Sensors ist derart, dass abhängig von den Messwerten in einem vorzugsweise im Sensor integrierten Sicherheitsmodul, insbesondere einem Überwachungsmodul, eine Sicherheitsfunktion, zum Beispiel eine Überwachungsfunktion, generiert wird, die generell auch eine Automatisierungsfunktion sein kann.

Beispielsweise kann aus Messwerten in Form von Positionswerten als Sicherheitsfunktion oder Automatisierungsfunktion Steuergrößen zur Steuerung eines fahrerlosen Transportfahrzeugs oder die Schutzfeldgröße für eine Überwachungsfunktion abgeleitet werden.

Insbesondere kann der Sensor als Sicherheitssensor ausgebildet sein, sodass die Sensoranordnung im Bereich der Sicherheitstechnik eingesetzt werden kann. Ein typischer Anwendungsfall ist eine Gefahrenbereichsüberwachung an einer gefahrbringenden Anlage, die insbesondere auch von einem Fahrzeug gebildet sein kann. In diesem Fall wird mit dem Sicherheitssensor ein Schutzfeld überwacht, das den Gefahrenbereich sichert. Im Fall einer Vorfeldüberwachung an einem fahrerlosen Transportfahrzeug muss das Schutzfeld an die aktuelle Fahrsituation angepasst werden.

Bei derartigen Sicherheitssensoren wird im Überwachungsmodul generell eine Sicherheitsfunktion generiert. Die Sicherheitsfunktion kann darin bestehen, eine zu überwachende Anlage abzuschalten, wenn im überwachten Schutzfeld ein Objekteingriff registriert wird. Dadurch wird die Anlage in einen sicheren Zustand überführt.

Eine weitere Sicherheitsfunktion kann eine automatische Schutzfeldumschaltung bei einer Schutzfeldüberwachung an einem fahrerlosen Transportfahrzeug sein, die abhängig von den aktuellen Messwerten des Sensors erfolgt.

Um Fehlfunktionen der Sensoranordnung auszuschließen, müssen die Berechnungsmethoden, mit denen aus Messwerten des Sensors Überwachungsfunktionen beziehungsweise Automatisierungsfunktionen generiert werden, zuverlässig sein. Bei Sensoranordnungen mit einem Sicherheitssensor sind diese Anforderungen noch erhöht, da für die Sensoranordnung und insbesondere den Sicherheitssensor hinsichtlich der Auswertung der Messwerte und der Generierung einer Sicherheitsfunktion eine hohe Fehlersicherheit gefordert wird.

Die Berechnungsmethoden und deren Überprüfung, die zur Generierung der Überwachungsfunktion beziehungsweise Sicherheitsfunktion eingesetzt werden, sind daher äußerst aufwändig.

Die EP 1 418 380 A1 betrifft ein Verfahren und eine Vorrichtung zur Überwachung eines Erfassungsbereichs an einem Arbeitsmittel mit wenigstens einer Kamera. In einem ersten Verfahrensschritt erfolgt das Erfassen einer objektfreien Schutzzone innerhalb des Erfassungsbereichs mittels der Kamera als Referenzhintergrund. Anschließend erfolgt die Überprüfung des Referenzhintergrundes hinsichtlich dessen Inhomogenität. Dabei wird der Referenzhintergrund nur dann als ungültig verworfen, wenn innerhalb einer vorgegebenen Varianzstrecke die ermittelte Inhomogenität ein vorgegebenes Maß unterschreitet. Ansonsten wird der Referenzhintergrund als gültig klassifiziert. Bei als gültig klassifiziertem Referenzhintergrund erfolgt die Freigabe zur Erfassung von in die Schutzzone eindringenden sicherheitskritischen Objekten. Die Erfassung erfolgt durch Vergleich von mit der Kamera aktuell ermittelten Bildern der Schutzzone mit dem gültigen Referenzhintergrund. Ein sicherheitskritisches Objekt gilt dann als erkannt, wenn das jeweilige aktuelle Bild signifikant vom Referenzhintergrund abweicht.

Die DE 10 2017 218 917 A1 betrifft eine Überwachungsvorrichtung zur sicherheitstechnischen Überwachung einer Handhabungsvorrichtung. Die Handhabungsvorrichtung weist einen Sicherheitsbereich und einen sicheren Betriebszustand und einen Arbeitszustand auf, wobei die Handhabungsvorrichtung ausgebildet ist, im Arbeitszustand einen Handhabungsschritt durchzuführen. Weiterhin umfasst die Überwachungsvorrichtung eine erste Sensoreinheit, eine zweiten Sensoreinheit und ein Auswertemodul, wobei die erste Sensoreinheit ausgebildet ist, einen Eintritt eines Objektes in den Sicherheitsbereich zu detektieren und als erste Sensordaten dem Auswertemodul bereitzustellen, wobei das Auswertemodul ausgebildet ist, basierend auf den ersten Sensordaten die Handhabungsvorrichtung anzusteuern, den sicheren Betriebszustand einzunehmen, sobald ein Eintritt in den Sicherheitsbereich detektiert wurde. Die zweite Sensoreinheit ist ausgebildet, den Sicherheitsbereich sensorisch zu überwachen und bei Eintritt des Objektes in den Sicherheitsbereich für das Objekt Zusatzdaten zu bestimmen und dem Auswertemodul bereitzustellen. Weiterhin ist das Auswertemodul ausgebildet, basierend auf den Zusatzdaten das Objekt als Person oder als Nichtperson zu klassifizieren, wobei das Auswertemodul ausgebildet ist, basierend auf den Zusatzdaten die Handhabungsvorrichtung anzusteuern, den Arbeitszustand einzunehmen, wenn das Objekt als Nichtperson klassifiziert wurde.

Der Erfindung liegt die Aufgabe zugrunde eine Sensoranordnung bereitzustellen, die eine hohe Zuverlässigkeit aufweist.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Die Erfindung betrifft eine Sensoranordnung mit wenigstens einem Sensor zur Erfassung von Objekten in einem Überwachungsbereich. Abhängig von Sensorsignalen des wenigstens einen Sensors werden wenigstens zwei diversitäre, voneinander unabhängige Eingabedaten erhalten oder generiert und sind jeweils einer Verarbeitungseinheit mit einem KI(Künstliche Intelligenz)-Verarbeitungsalgorithmus zugeführt. In den Verarbeitungseinheiten werden generierte Verarbeitungsergebnisse zu einem ein Ausgangssignal der Sensoranordnung bildenden Gesamtergebnis verknüpft.

Die Erfindung betrifft weiterhin ein entsprechendes Verfahren.

Die erfindungsgemäße Sensoranordnung dient generell zur Erfassung von Objekten in einem Überwachungsbereich. Anhand der Sensorsignale des oder der Sensoren wird ein Ausgangssignal generiert, das generell eine Information über das Vorhandensein eines Objekts im Überwachungsbereich liefert. Dabei kann das Ausgangssignal ein binäres Schaltsignal sein, dessen Schaltzustände angeben, ob sich ein Objekt im Überwachungsbereich befindet oder nicht. Generell können als Ausgangssignale auch Distanz- oder Positionswerte ausgegeben werden.

Gemäß einer besonders vorteilhaften Ausführungsform ist die Sensoranordnung eine Sicherheitssensoranordnung, welche zur Überwachung eines Gefahrenbereichs an einer Anlage ausgebildet ist. Die Funktion der Sicherheitssensoranordnung ist derart, dass diese bei Registrieren eines Objekteingriffs im Gefahrenbereich als Ausgangssignal eine Sicherheitsfunktion für die Anlage generiert.

Insbesondere generiert die Sicherheitssensoranordnung ein binäres Schaltsignal, dessen Schaltzustände angeben, ob sich ein Objekt im Gefahrenbereich befindet oder nicht. Wird mit der Sicherheitssensoranordnung ein Objekt im Gefahrenbereich detektiert, wird durch das Schaltsignal der Sicherheitssensoranordnung eine Sicherheitsfunktion derart ausgelöst, dass die Anlage in einen sicheren Zustand überführt wird, so dass von dieser keine Gefahren mehr ausgehen können. Insbesondere wird die Anlage stillgesetzt.

Ein wesentlicher Vorteil der erfindungsgemäßen Sensoranordnung besteht darin, dass die Auswertung der Sensorsignale des oder der Sensoren mittels KI-Verarbeitungsalgorithmen erfolgt. Dadurch wird ein selbstlernendes Auswertesystem geschaffen, welches sich selbständig an bestimmte Randbedingungen anpasst. Damit wird eine hohe Zuverlässigkeit der Objektdetektionen auch bei sich ändernden Randbedingungen gewährleistet.

Ein wesentlicher Aspekt der Erfindung besteht darin, dass bei der Sensoranordnung eine mehrkanalige Auswertung mit mehreren KI-Verarbeitungsalgorithmen durchgeführt wird. Wesentlich hierbei ist, dass die Eingabedaten für die einzelnen KI-Verarbeitungsalgorithmen diversitär, das heißt unterschiedlich und unabhängig voneinander sind.

Damit multiplizieren sich die einzelnen Fehlerwahrscheinlichkeiten der Auswertungen in den einzelnen KI-Verarbeitungsalgorithmen zu einer Gesamtfehlerwahrscheinlichkeit, mit der das Gesamtergebnis, das heißt das Ausgangssignal der Sensoranordnung generiert wird.

Dadurch lassen sich insbesondere Gesamtfehlerwahrscheinlichkeiten realisieren, die für einen Einsatz der Sensoranordnung als Sicherheitssensoranordnung im Bereich der Sicherheitstechnik gefordert werden.

Im Bereich der Sicherheitstechnik wird die Fehlersicherheit, die insbesondere die Sicherheitssensoranordnung bei der Generierung des Ausgangssignals erfüllen muss, durch das durch normative Anforderungen (insbesondere der Norm DIN EN 61508) bestimmte SIL (Sicherheitsintegritätslevel) bestimmt. Dieser hängt insbesondere von der Anforderungsrate dr ab, das heißt von der Rate pro Zeiteinheit, mit der eine Sicherheitsfunktion generiert werden muss.

Da bei der erfindungsgemäßen Sensoranordnung zur Signalauswertung KI-Algorithmen eingesetzt werden, die statische Auswerteverfahren darstellen, muss zur Erfüllung der Anforderungen für den Einsatz im Bereich der Sicherheitstechnik eine sehr kleine Gesamtfehlerwahrscheinlichkeit $P_{ges}$ gefordert werden, die typischerweise bei $P_{ges} < 10^{-7}$ liegt.

Da erfindungsgemäß zur Signalauswertung mehrere KI-Verarbeitungsalgorithmen eingesetzt werden, welchen diversitäre unterschiedliche voneinander unabhängige Eingabedaten zugeführt werden, ergibt sich die Gesamtfehlerwahrscheinlichkeit aus dem Produkt der Einzelfehlerwahrscheinlichkeiten $p_i$ ($i = 1... N$, wobei N = Anzahl der KI-Verarbeitungsalgorithmen ist).

Bei einer Sensoranordnung mit zwei KI-Verarbeitungsalgorithmen ergibt sich die Gesamtfehlerwahrscheinlichkeit aus

$$P_{ges} = p_1 \cdot p_2$$

Unter der Voraussetzung, dass $p_1 = p_2 = p_e$ ist, ergibt sich für die Einzelfehlerwahrscheinlichkeit $p_e$

$$p_e = \sqrt{P_{ges}}$$

Dies bedeutet, dass für die einzelnen KI-Verarbeitungsalgorithmen erheblich kleinere Fehlerwahrscheinlichkeiten realisiert werden müssen, um die erforderliche Fehlersicherheit

$$F = 1 - P_{ges}$$

des Gesamtsystems zu realisieren. Diese erforderliche Fehlersicherheit, das heißt die Wahrscheinlichkeit, dass die Sensoranordnung ein korrektes Gesamtergebnis liefert, wird auch Vertrauensmaß genannt.

Gemäß einer ersten Variante der Erfindung bilden Sensorsignale unterschiedlicher Sensoren unterschiedliche Eingabedaten.

Die Sensoren der erfindungsgemäßen Sensoranordnung sind vorteilhaft als messende Sensoren ausgebildet. Dabei kann ein Sensor prinzipiell als Radarsensor oder Ultraschallsensor ausgebildet sein.

Besonders vorteilhaft ist der oder jeder Sensor ein optischer Sensor.

Beispielsweise kann der optische Sensor als Flächendistanzsensor, das heißt scannender Distanzsensor ausgebildet sein. Weiterhin kann der Sensor als Kamerasensor ausgebildet sein, wobei besonders vorteilhaft dieser zur Durchführung von Distanzmessungen ausgebildet ist. Vorteilhaft erfolgen die Distanzmessungen nach einem Impuls-Laufzeit-Verfahren.

Gemäß einer weiteren Variante der Erfindung werden Sensorsignale unter verschiedenen Kriterien in Vorverarbeitungseinheiten vorverarbeitet, wodurch unterschiedliche Eingabedaten generiert werden.

Gemäß einer vorteilhaften Ausführungsform werden aus den Sensorsignalen in den Vorverarbeitungseinheiten unterschiedliche Kenngrößen abgeleitet.

Beispielsweise können unterschiedliche Kenngrößen durch wahrscheinliche Sichtwinkel eines oder mehrerer Sensoren auf eine zu überwachende Szene gebildet werden.

Weiterhin können durch geeignete Vorverarbeitungen aus den Sensorsignalen Entfernungsdaten und Helligkeitsdaten als unterschiedliche Kenngrößen abgeleitet werden.

Weiterhin können aus Sensorsignalen statische und dynamische Bildelemente als unterschiedliche Kenngrößen abgebildet werden.

Weiterhin können aus Sensorsignalen Farbdaten und Helligkeiten als unterschiedliche Kenngrößen abgeleitet werden.

Gemäß einer weiteren vorteilhaften Ausführungsform sind in den Vorverarbeitungseinheiten unterschiedliche Algorithmen vorgesehen.

Prinzipiell können in den Vorverarbeitungseinheiten deterministische Algorithmen vorgesehen sein.

Besonders vorteilhaft sind in den Vorverarbeitungseinheiten KI-Algorithmen vorgesehen.

Insbesondere können die KI-Algorithmen unterschiedliche Lernkriterien verwenden.

Vorteilhaft sind die KI-Verarbeitungsalgorithmen und/oder KI-Algorithmen von neuronalen Netzen oder von Entscheidungsbäumen gebildet.

Die KI-Verarbeitungsalgorithmen und KI-Algorithmen sind in einer Rechnereinheit der Sensoranordnung als Softwaremodule implementiert.

Gemäß einer vorteilhaften Ausführungsform ist wenigstens eine Entscheidereinheit vorgesehen, in welcher abhängig von den Verarbeitungsergebnissen der KI-Verarbeitungsalgorithmen das Gesamtergebnis erzeugt ist.

Die oder jede Entscheidereinheit ist ebenfalls in Form von Softwaremodulen in der Rechnereinheit der Sensoranordnung implementiert.

Vorteilhaft werden in der Entscheidereinheit die Verarbeitungsergebnisse logisch verknüpft.

Weiterhin werden in der Entscheidereinheit die Verarbeitungsergebnisse miteinander verglichen.

Insbesondere wird in der Entscheidereinheit durch Mittelung der Verarbeitungsergebnisse das Gesamtergebnis ermittelt.

Bei dem Vergleich der Verarbeitungsergebnisse können insbesondere besonders verlässliche oder auch potentiell fehlerhafte und/oder unsichere Ergebnisse identifiziert werden. Unsichere Ergebnisse können insbesondere durch grenzwertüberschreitende Werteabweichungen, die insbesondere über einen vorgegebenen Zeitraum anhalten, identifiziert werden.

Dann kann in der Entscheidereinheit ein Vertrauensniveau für das Gesamtergebnis ermittelt werden, welches als zusätzliche Ausgabegröße ausgebbar ist.

Dies liefert ein verlässliches Maß für die Fehlersicherheit der Sensoranordnung.

Gemäß einer vorteilhaften Weiterbildung ist eine mehrkanalige Anordnung von sich gegenseitig überwachenden Entscheidereinheiten vorgesehen.

Dabei ist vorteilhaft, dass jedem KI-Verarbeitungsalgorithmus eine Entscheidereinheit zugeordnet ist.

Durch die redundante Ausführung der sich gegenseitig überwachenden Entscheidereinheiten, wird eine besonders fehlersichere Struktur der Sensoranordnung erhalten.

Gemäß einer vorteilhaften Ausführungsform werden die KI-Algorithmen der Vorverarbeitungseinheiten durch Modellbildungen verifiziert, indem Modellausgangsgrößen mit den Vorverarbeitungseinheiten zugeführten Sensorsignalen verglichen werden.

Alternativ oder zusätzlich werden die KI-Verarbeitungsalgorithmen durch Modellbildungen gegen die Sensorsignale oder gegen die in den Vorverarbeitungseinheiten generierten Eingabedaten verifiziert.

Auf diese Weise kann die Zuverlässigkeit und Fehlersicherheit der für die Signalauswertungen eingesetzten KI-Verarbeitungsalgorithmen beziehungsweise KI-Algorithmen überprüft werden.

Weiter vorteilhaft wird durch Auswertung von in den Vorverarbeitungseinheiten generierten Eingabedaten ein Vertrauensmaß für den jeweiligen KI-Verarbeitungsalgorithmus bestimmt.

Zudem ist es möglich, dass aus Verifikationsergebnissen und/oder aus dem berechneten Vertrauensmaß ein Gesamtvertrauensmaß bestimmt wird.

Damit ist es möglich, die insbesondere für den Einsatz im Bereich der Sicherheitstechnik geforderte Fehlersicherheit beziehungsweise die realisierte Gesamtfehlerwahrscheinlichkeit für die Sensoranordnung nachzuprüfen und zu verifizieren.

Vorteilhaft werden die Verifikationsergebnisse, das Vertrauensmaß und/oder das Gesamtvertrauensmaß an eine externe Einheit ausgegeben.

Die externe Einheit kann eine externe Steuerung oder Überwachungseinheit sein.

Weiterhin ist es möglich, dass das Gesamtvertrauensmaß mit einem Mindestvertrauensmaß verglichen wird, und dass eine Signalabgabe erfolgt, wenn das Gesamtvertrauensmaß das Mindestvertrauensmaß unterschreitet.

Die Signalabgabe liefert ein Signal, wenn das geforderte Mindestvertrauensmaß nicht erfüllt wird. Dadurch kann ein Benutzer feststellen, dass die Sensoranordnung das geforderte Sicherheitsniveau mit der Sensoranordnung nicht mehr erfüllt.

Gemäß einer vorteilhaften Ausführungsform sind Mittel zur Überwachung der KI-Verarbeitungsalgorithmen und/oder KI-Algorithmen vorgesehen.

Vorteilhaft sind die Mittel zur Überwachung ausgebildet, um Prüfnummern über Gewichtungsparameter der KI-Verarbeitungsalgorithmen und/oder KI-Algorithmen zu bilden.

Gemäß einer ersten Variante werden die Prüfsummen mit vorbestimmten Werten verglichen.

Gemäß einer zweiten Variante werden bei einer mehrkanaligen Ausführung der KI-Verarbeitungsalgorithmen und/oder KI-Algorithmen die Prüfsummen für die einzelnen Kanäle miteinander verglichen.

Mit diesen Überwachungsmitteln können Fehler in der Sensoranordnung, insbesondere Hardware- und Softwarefehler der Sensoranordnung aufgedeckt werden, was eine weitere wichtige Voraussetzung für den Einsatz der Sensoranordnung im Bereich der Sicherheitstechnik darstellt.

Die Erfindung wird im Folgenden anhand der Zeichnungen erläutert. Es zeigen:

Figur 1: Schematische Darstellung eines ersten Beispiels der erfindungsgemäßen Sensoranordnung.

Figur 2: Schematische Darstellung eines zweiten Beispiels der erfindungsgemäßen Sensoranordnung.

Figur 3: Funktionsdiagramm für eine Sensoranordnung gemäß Figur 2.

Figur 4: Funktionsdiagramm für eine Sensoranordnung gemäß Figur 1.

Figur 5: Funktionsdiagramm für eine Sensoranordnung gemäß Figur 2.

Figur 6: Funktionsdiagramm für eine Sensoranordnung gemäß Figur 2.

Figur 7: Funktionsdiagramm für eine Sensoranordnung gemäß Figur 1.

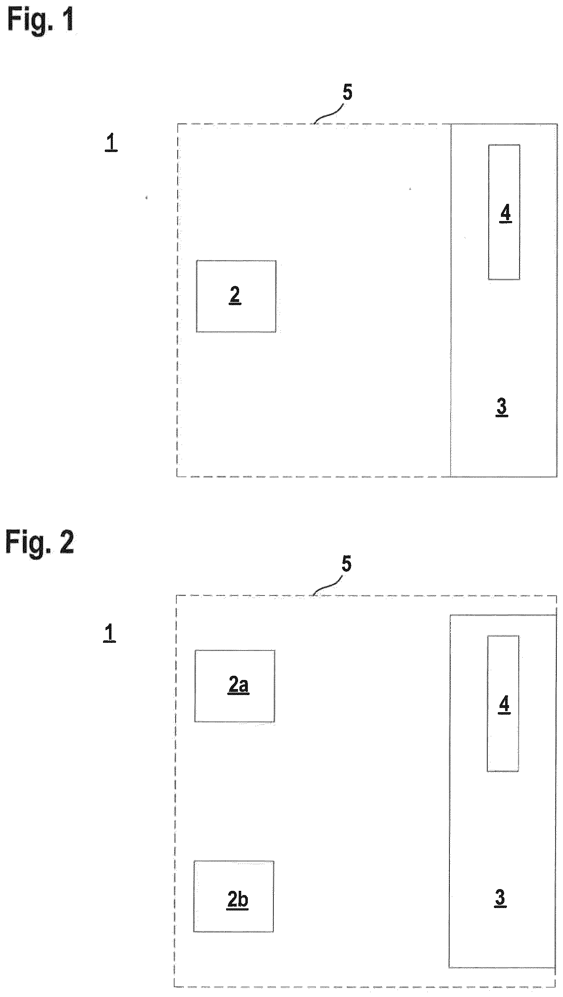

Figur 1 zeigt schematisch ein erstes Ausführungsbeispiel der erfindungsgemäßen Sensoranordnung 1. Diese Sensoranordnung 1 umfasst einen Sensor 2, der zur Absicherung einer Anlage 3 eingesetzt wird. Die Anlage 3 wird von einer Steuerung 4 gesteuert.

Figur 2 zeigt schematisch ein zweites Ausführungsbeispiel der erfindungsgemäßen Sensoranordnung 1. Diese Sensoranordnung 1 umfasst zwei Sensoren 2a, 2b, die zur Absicherung einer Anlage 3 eingesetzt werden. Generell können auch mehr als zwei Sensoren eingesetzt werden.

Die Sensoren 2, 2a, 2b der erfindungsgemäßen Sensoranordnung 1 sind vorteilhaft als messende Sensoren ausgebildet. Dabei kann ein Sensor 2, 2a, 2b prinzipiell als Radarsensor oder Ultraschallsensor ausgebildet sein.

Besonders vorteilhaft ist der oder jeder Sensor 2, 2a, 2b ein optischer Sensor.

Beispielsweise kann der optische Sensor als Flächendistanzsensor, das heißt scannender Distanzsensor ausgebildet sein. Weiterhin kann der Sensor 2, 2a, 2b als Kamerasensor ausgebildet sein, wobei besonders vorteilhaft dieser zur Durchführung von Distanzmessungen ausgebildet ist. Vorteilhaft erfolgen die Distanzmessungen nach einem Impuls-Laufzeit-Verfahren.

Die erfindungsgemäße Sensoranordnung 1 dient generell zur Erfassung von Objekten in einem Überwachungsbereich. Anhand der Sensorsignale des oder der Sensoren 2, 2a, 2b wird ein Ausgangssignal generiert, das generell eine Information über das Vorhandensein eines Objekts im Überwachungsbereich liefert. Dabei kann das Ausgangssignal ein binäres Schaltsignal sein, dessen Schaltzustände angeben, ob sich ein Objekt im Überwachungsbereich befindet oder nicht. Generell können als Ausgangssignale auch Distanz- oder Positionswerte ausgegeben werden.

Im vorliegenden Fall ist die Sensoranordnung 1 eine Sicherheitssensoranordnung, welche zur Überwachung eines Gefahrenbereichs 5 an der Anlage 3 ausgebildet ist. Die Funktion der Sicherheitssensoranordnung ist derart, dass diese bei Registrieren eines Objekteingriffs im Gefahrenbereich 5 als Ausgangssignal eine Sicherheitsfunktion für die Anlage 3 generiert.

Dabei generiert die Sicherheitssensoranordnung ein binäres Schaltsignal, dessen Schaltzustände angeben, ob sich ein Objekt im Gefahrenbereich 5 befindet oder nicht. Wird mit der Sicherheitssensoranordnung ein Objekt im Gefahrenbereich 5 detektiert, wird durch das Schaltsignal der Sicherheitssensoranordnung eine Sicherheitsfunktion derart ausgelöst, dass die Anlage 3 in einen sicheren Zustand überführt wird, so dass von dieser keine Gefahren mehr ausgehen können. Insbesondere wird die Anlage 3 stillgesetzt.

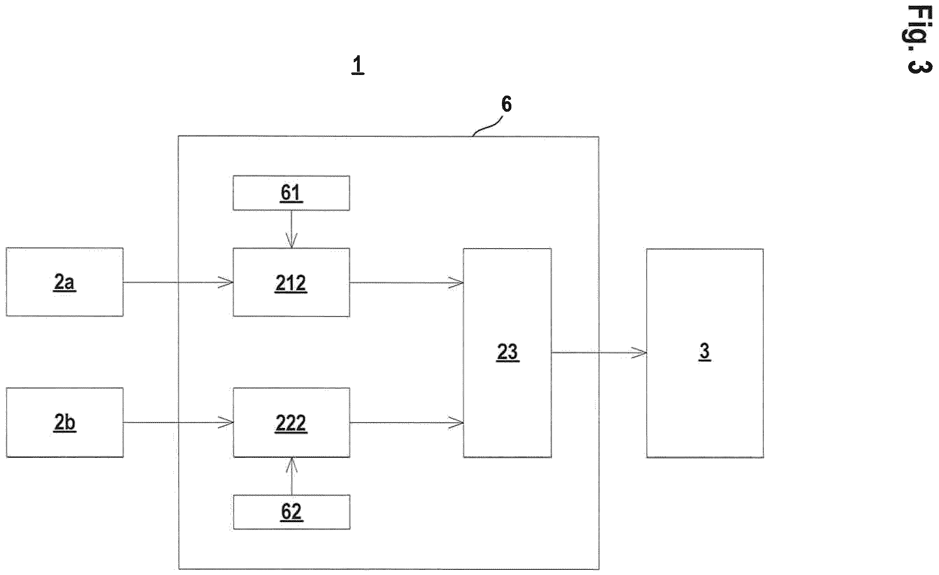

Figur 3 zeigt ein Funktionsdiagramm für die Sensoranordnung 1 gemäß Figur 2. Die Sensoren 2a, 2b sind unterschiedlich ausgebildet, vorzugsweise mit unterschiedlichen Sensortechnologien. Beispielsweise ist der erste Sensor 2a ein Flächendistanzsensor und der zweite Sensor 2b eine distanzmessende 3D-Kamera.

Als Auswerteeinheit ist den Sensoren 2a, 2b eine Rechnereinheit 6 zugeordnet.

Mit den Sensoren 2a, 2b werden unterschiedliche Sensorsignale generiert, die voneinander unabhängige, diversitäre Eingabedaten für jeweils einen KI-Verarbeitungsalgorithmus 212, 222 in einer Verarbeitungseinheit bilden.

Die KI-Verarbeitungsalgorithmen 212, 222 sind von neuronalen Netzen oder Entscheidungsbäumen gebildet.

In den KI-Verarbeitungsalgorithmen 212, 222 werden abhängig von den Eingabedaten Verarbeitungsergebnisse generiert, die einer gemeinsamen Entscheidereinheit 23 zugeführt werden. In der Entscheidereinheit 23 werden die Verarbeitungsergebnisse miteinander verglichen und/oder logisch verknüpft, wodurch als Gesamtergebnis das Schaltsignal für die Anlage 3 generiert wird.

Da die KI-Verarbeitungsalgorithmen 212, 222 voneinander unabhängige, diversitäre Eingabedaten verarbeiten, ist die Gesamtfehlerwahrscheinlichkeit des Gesamtergebnisses gleich dem Produkt der Einzelfehlerwahrscheinlichkeiten der mit dem KI-Verarbeitungsalgorithmus 212, 222 generierten Verarbeitungsergebnisse.

Die KI-Verarbeitungsalgorithmen 212, 222 sind für ein maschinelles Lernen ausgebildet. Den KI-Verarbeitungsalgorithmen 212, 222 werden zudem Signale jeweils eines Umweltsensors 61, 62 zugeführt. Die Signale der Umweltsensoren 61, 62 liefern zusätzliche Informationen, um die Verarbeitungsergebnisse der KI-Verarbeitungsalgorithmen 212, 222 zu verbessern. Abhängig von den Verarbeitungsergebnissen der KI-Verarbeitungsalgorithmen 212, 222 wird in der Entscheidereinheit 23 ein Vertrauensniveau ermittelt, das angibt, ob das Gesamtergebnis sicher ist oder nicht. Dieses Vertrauensniveau kann als weitere Ausgabegröße ausgegeben werden.

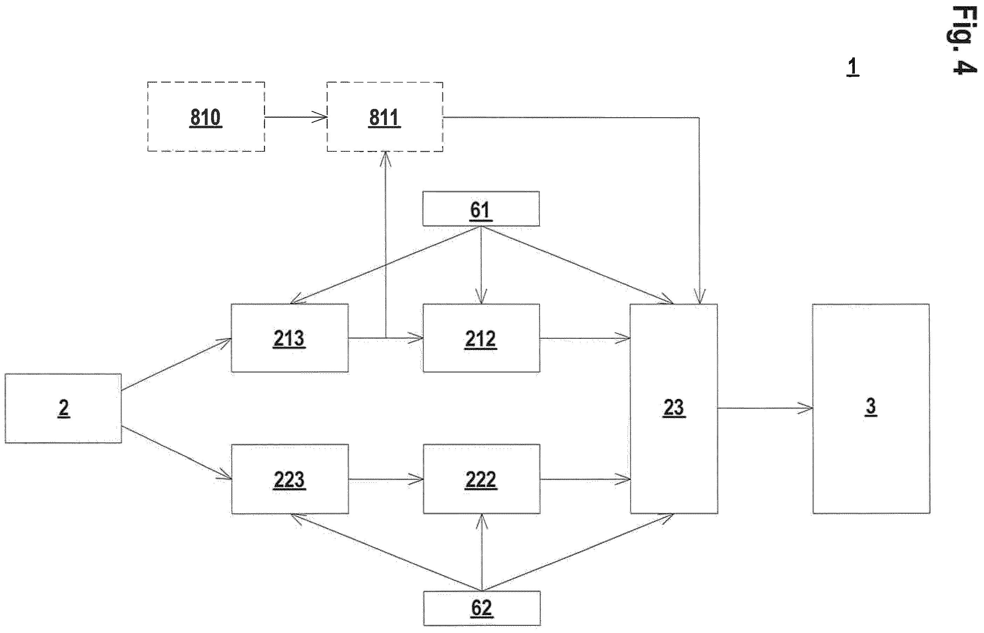

Figur 4 zeigt ein Funktionsdiagramm für eine Sensoranordnung 1 gemäß Figur 1. Die Komponenten zur Signalauswertung des Sensors 2 können in diesem integriert oder in einer separaten Einheit vorgesehen sein.

Die Sensorsignale des Sensors 2 werden zwei Vorverarbeitungseinheiten 213, 223 zugeführt, in welchen diversitäre, voneinander unabhängige Eingabedaten für die KI-Verarbeitungsalgorithmens 212, 222 generiert werden. Aus den Verarbeitungsergebnissen der KI-Verarbeitungsalgorithmen 212, 222 wird wiederum in der Entscheidereinheit 23 als Gesamtergebnis das Schaltsignal zur Ansteuerung der Anlage 3 generiert.

Wiederum sind Umweltsensoren 61, 62 vorgesehen, deren Signale neben den KI-Verarbeitungsalgorithmen 212, 222 auch den Vorverarbeitungseinheiten 213, 223 und der Entscheidereinheit 23 zugeführt sind.

In der Vorverarbeitungseinheit 213, 223 werden die Sensorsignale des Sensors 2 nach unterschiedlichen Kriterien vorverarbeitet.

Ist der Sensor 2 beispielsweise als Kamerasensor ausgebildet, können in der ersten Vorverarbeitungseinheit 213 aus den Sensorsignalen des Sensors 2 Farbdaten und in der zweiten Vorverarbeitungseinheit 223 Helligkeitsdaten als Eingabedaten separiert werden.

Bei einer distanzmessenden 3D-Kamera können in der ersten Vorverarbeitungseinheit 213 Entfernungsdaten und in der zweiten Vorverarbeitungseinheit 223 Helligkeitsdaten als Eingabedaten separiert werden.

Weiterhin ist es möglich, dass in der ersten Vorverarbeitungseinheit 213 statische Bilddaten und in der zweiten Vorverarbeitungseinheit 223 dynamische Bilddaten als voneinander unabhängige Eingabedaten generiert werden.

Dabei sind in den Vorverarbeitungseinheiten 213, 223 unterschiedliche Algorithmen vorgesehen.

Hierbei ist es möglich, dass in den Vorverarbeitungseinheiten 213, 223 deterministische Algorithmen vorgesehen sind.

Alternativ sind in den Vorverarbeitungseinheiten 213, 223 KI-Algorithmen vorgesehen.

Dabei können die KI-Algorithmen unterschiedliche Lernkriterien verwenden.

Bei der Sensoranordnung 1 gemäß Figur 4 werden in einer Speichereinheit gespeicherte Trainingsdaten 810 einer Bewertungseinheit 811 zugeführt. Durch Vergleich der Trainingsdaten 810 mit in der Vorverarbeitungseinheit 213 generierten Eingabedaten beziehungsweise mit Merkmalen des KI-Verarbeitungsalgorithmus 212 kann ein Vertrauensmaß für die mit dem KI-Verarbeitungsalgorithmus 212 generierten Verarbeitungsergebnisse ermittelt werden. In die Berechnung des Vertrauensmaß können auch die Signale des Umweltsensors 61 einbezogen werden. Eine entsprechende, in Figur 4 nicht dargestellte Anordnung ist auch für den KI-Verarbeitungsalgorithmus 222 vorgesehen.

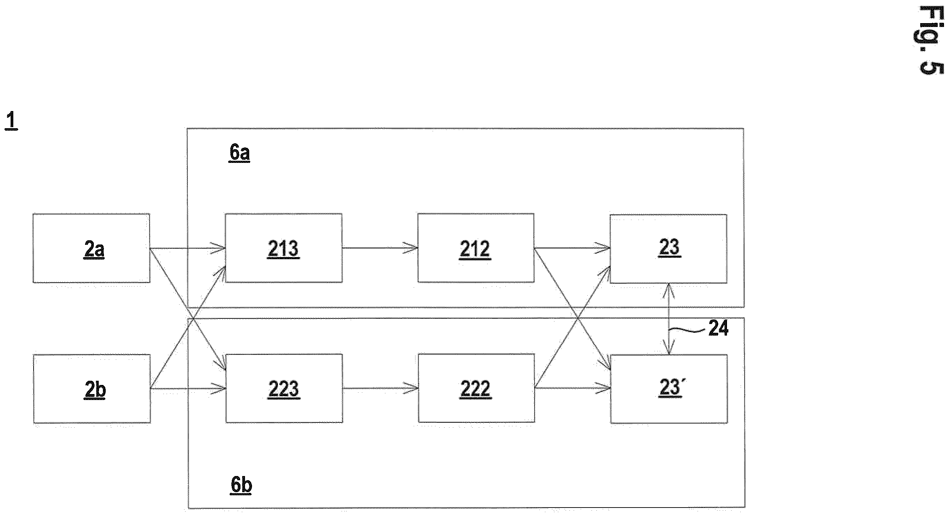

Figur 5 zeigt ein Funktionsdiagramm für eine Sensoranordnung 1 gemäß Figur 2. Die Sensoranordnung 1 weist eine zweikanalige Auswertestruktur auf, wobei jedem Sensor 2a, 2b eine Rechnereinheit 6a, 6b zugeordnet ist oder in diesem integriert ist.

Jede Rechnereinheit 6a, 6b weist eine Vorverarbeitungseinheit 213, 223 zur Verarbeitung der Sensorsignale des jeweiligen Sensors 2a, 2b, einen KI-Verarbeitungsalgorithmus 212, 222 sowie eine Entscheidereinheit 23, 23' auf. Zur gegenseitigen Kontrolle werden die Sensorsignale der Sensoren 2a, 2b beiden Vorverarbeitungseinheiten 213, 223 zugeführt. Die Verarbeitungsergebnisse beider KI-Verarbeitungsalgorithmen 212, 222 werden jeweils beiden Entscheidereinheiten 23, 23' zugeführt, die sich, wie mit dem Doppelpfeil 24 angedeutet, gegenseitig überwachen. In den Entscheidereinheiten 23, 23' wird durch einen Vergleich oder eine Logikverknüpfung als Gesamtergebnis das Schaltsignal für die Anlage 3 generiert.

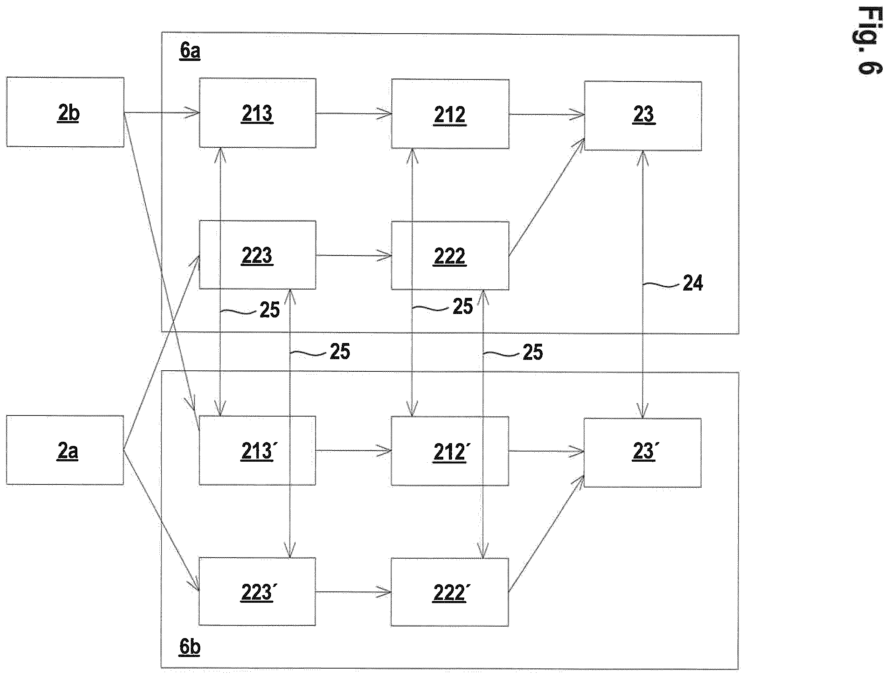

Figur 6 zeigt ein weiteres Funktionsdiagramm für eine Sensoranordnung 1 gemäß Figur 2. Die Ausführungsform gemäß Figur 6 stellt eine Erweiterung gegenüber der Ausführungsform gemäß Figur 5 dahingehend dar, dass sowohl die Rechnereinheit 6a als auch die Rechnereinheit 6b redundante Auswertestrukturen aufweisen.

Dementsprechend weist die Rechnereinheit 6a zwei Vorverarbeitungseinheiten 213, 223 mit je einem KI-Algorithmus und zwei Verarbeitungseinheiten mit je einem KI-Verarbeitungsalgorithmus 212, 222 auf. Die Verarbeitungsergebnisse der KI-Verarbeitungsalgorithmen 212, 222 werden in die Entscheidereinheit 23 eingelesen.

Die Rechnereinheit 6b weist zwei Vorverarbeitungseinheiten 213', 223' mit je einem KI-Algorithmus und zwei Verarbeitungseinheiten mit je einem KI-Verarbeitungsalgorithmus 212', 222' auf. Die Verarbeitungsergebnisse der KI-Verarbeitungsalgorithmen 212', 222' werden in die Entscheidereinheit 23' eingegeben.

Wie mit den Doppelpfeilen 25 veranschaulicht, überwachen sich jeweils die Vorverarbeitungseinheiten 213 und 213', die Vorverarbeitungseinheiten 223, 223' sowie die KI-Verarbeitungsalgorithmen 212 und 212' sowie die KI-Verarbeitungsalgorithmen 222 und 222' gegenseitig. Weiterhin überwachen sich die Entscheidereinheiten 23 und 23' gegenseitig (Doppelpfeil 24).

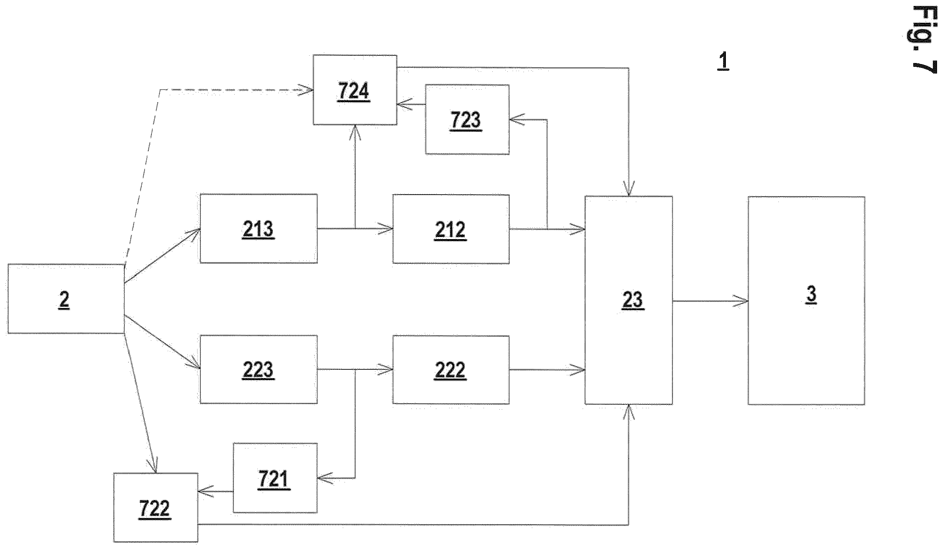

Figur 7 zeigt ein Ausführungsbeispiel eines Funktionsdiagramms für eine Sensoranordnung 1 gemäß Figur 1.

Die Sensoranordnung 1 gemäß Figur 7 umfasst einen Sensor 2, dessen Sensorsignale zwei Vorverarbeitungseinheiten 213, 223 mit je einem KI-Algorithmus zugeführt werden, in welchen diversitäre, voneinander unabhängige Eingabedaten generiert werden. Jeder Vorverarbeitungseinheit 213, 223 ist eine Verarbeitungseinheit mit einem KI-Verarbeitungsalgorithmus 212, 222 nachgeordnet, wo die jeweiligen Eingabedaten zu Verarbeitungsergebnissen verarbeitet werden. Die Verarbeitungsergebnisse der KI-Verarbeitungsalgorithmen 212, 222 werden einer Entscheidereinheit 23 zugeführt, wo als Gesamtergebnis das Schaltsignal für die Anlage 3 generiert wird.

In der Modellierungseinheit 723 erfolgt eine Modellierung der vom KI-Verarbeitungsalgorithmus 212 gewonnenen Verarbeitungsergebnisse durch eine Rücktransformation in den Raum der Eingabedaten der Vorverarbeitungseinheit 213. In der Verifizierungseinheit 724 erfolgt die Verifizierung der Ausgangssignale der Modellierungseinheit 723 gegen deterministisch ermittelte Vorverarbeitungswerte der Vorverarbeitungseinheit 213.

Über eine Modellbildung in der Modellierungseinheit 723 und eine Verifikation in der Verifizierungseinheit 724 werden die Ergebnisse des KI-Verarbeitungsalgorithmus 212 zusätzlich verifiziert. Alternativ kann die Modellbildung auch die Umkehrfunktion einer deterministischen Vorverarbeitung der Vorverarbeitungseinheit 213 beinhalten. Dann kann die Verifizierung direkt durch Vergleich mit den Sensorsignalen des Sensors 2 erfolgen.

In der Modellierungseinheit 721 erfolgt die Modellierung der von der Vorverarbeitungseinheit 223 gewonnenen Eingabedaten durch Rücktransformation in den Sensorraum. In der Verifizierungseinheit 722 erfolgt die Verifizierung der Ausgangssignale der Modellierungseinheit 721 gegen die tatsächlich gemessenen Sensorsignale.

Bezugszeichenliste

| | |
|---|---|
| (1) | Sensoranordnung |
| (2) | Sensor |
| (2a, b) | Sensor |
| (3) | Anlage |
| (4) | Steuerung |
| (5) | Gefahrenbereich |
| (6) | Rechnereinheit |
| (6a, 6b) | Rechnereinheit |
| (23, 23') | Entscheidereinheit |
| (24) | Doppelpfeil |
| (25) | Doppelpfeil |
| (61) | Umweltsensor |
| (62) | Umweltsensor |
| (212, 212') | KI-Verarbeitungsalgorithmus |
| (213, 213') | Vorverarbeitungseinheit |
| (222, 222') | KI-Verarbeitungsalgorithmus |
| (223, 223') | Vorverarbeitungseinheit |
| (721) | Modellierungseinheit |
| (722) | Verifizierungseinheit |
| (723) | Modellierungseinheit |
| (724) | Verifizierungseinheit |
| (810) | Trainingsdaten |
| (811) | Bewertungseinheit |

**Patentansprüche**

1. Sensoranordnung (1) mit wenigstens einem Sensor (2) zur Erfassung von Objekten in einem Überwachungsbereich, **dadurch gekennzeichnet, dass** abhängig von Sensorsignalen des wenigstens einen Sensors (2) wenigstens zwei diversitäre, voneinander unabhängige Eingabedaten erhalten oder generiert werden und jeweils einer Verarbeitungseinheit mit einem KI(Künstliche Intelligenz)-Verarbeitungsalgorithmus (212, 222) zugeführt sind, und dass in den Verarbeitungseinheiten generierte Verarbeitungsergebnisse zu einem ein Ausgangssignal der Sensoranordnung (1) bildenden Gesamtergebnis verknüpft werden.

2. Sensoranordnung (1) nach Anspruch 1, **dadurch**

**gekennzeichnet, dass** diese eine Sicherheitssensoranordnung ist, welche zur Überwachung eines Gefahrenbereichs (5) an einer Anlage (3) ausgebildet ist.

3. Sensoranordnung (1) nach Anspruch 2, **dadurch gekennzeichnet, dass** diese bei Registrieren eines Objekteingriffs im Gefahrenbereich (5) als Ausgangssignal eine Sicherheitsfunktion für die Anlage (3) generiert.

4. Sensoranordnung (1) nach einem der Ansprüche 1 bis 3, **dadurch gekennzeichnet, dass** Sensorsignale unterschiedlicher Sensoren (2, 2a, 2b) unterschiedliche Eingabedaten bilden.

5. Sensoranordnung (1) nach einem der Ansprüche 1 bis 4, **dadurch gekennzeichnet, dass** Sensoren (2, 2a, 2b) in Form von Radarsensoren, Ultraschallsensoren oder optischen Sensoren vorgesehen sind.

6. Sensoranordnung (1) nach Anspruch 5, **dadurch gekennzeichnet, dass** Sensoren (2, 2a, 2b) in Form von Kamerasensoren oder Flächendistanzsensoren ausgebildet sind.

7. Sensoranordnung (1) nach einem der Ansprüche 1 bis 6, **dadurch gekennzeichnet, dass** Sensorsignale unter verschiedenen Kriterien in Vorverarbeitungseinheiten (213, 223) vorverarbeitet werden, wodurch unterschiedliche Eingabedaten generiert werden.

8. Sensoranordnung (1) nach Anspruch 7, **dadurch gekennzeichnet, dass** aus den Sensorsignalen in den Vorverarbeitungseinheiten (213, 223) unterschiedliche Kenngrößen abgeleitet werden.

9. Sensoranordnung (1) nach Anspruch 7, **dadurch gekennzeichnet, dass** in den Vorverarbeitungseinheiten (213, 223) unterschiedliche Algorithmen vorgesehen sind.

10. Sensoranordnung (1) nach Anspruch 9, **dadurch gekennzeichnet, dass** in den Vorverarbeitungseinheiten (213, 223) deterministische Algorithmen vorgesehen sind.

11. Sensoranordnung (1) nach Anspruch 9, **dadurch gekennzeichnet, dass** in den Vorverarbeitungseinheiten (213, 223) KI-Algorithmen vorgesehen sind.

12. Sensoranordnung (1) nach Anspruch 11, **dadurch gekennzeichnet, dass** die KI-Algorithmen unterschiedliche Lernkriterien verwenden.

13. Sensoranordnung (1) nach einem der Ansprüche 1 bis 12, **dadurch gekennzeichnet, dass** die KI-Verarbeitungsalgorithmen (212, 222) und/oder KI-Algorithmen von neuronalen Netzen oder von Entscheidungsbäumen gebildet sind.

14. Sensoranordnung (1) nach einem der Ansprüche 1 bis 3, **dadurch gekennzeichnet, dass** wenigstens eine Entscheidereinheit (23) vorgesehen ist, in welcher abhängig von den Verarbeitungsergebnissen der KI-Verarbeitungsalgorithmen (212, 222) das Gesamtergebnis erzeugt ist.

15. Sensoranordnung (1) nach Anspruch 14, **dadurch gekennzeichnet, dass** in der Entscheidereinheit (23) die Verarbeitungsergebnisse logisch verknüpft werden.

16. Sensoranordnung (1) nach Anspruch 14, **dadurch gekennzeichnet, dass** in der Entscheidereinheit (23) die Verarbeitungsergebnisse miteinander verglichen werden.

17. Sensoranordnung (1) nach Anspruch 16, **dadurch gekennzeichnet, dass** in der Entscheidereinheit (23) durch Mittelung der Verarbeitungsergebnisse das Gesamtergebnis ermittelt wird.

18. Sensoranordnung (1) nach einem der Ansprüche 16 oder 17, **dadurch gekennzeichnet, dass** in der Entscheidereinheit (23) ein Vertrauensniveau für das Gesamtergebnis ermittelt wird, welches als zusätzliche Ausgabegröße ausgebbar ist.

19. Sensoranordnung (1) nach einem der Ansprüche 14 bis 18, **dadurch gekennzeichnet, dass** eine mehrkanalige Anordnung von sich gegenseitig überwachenden Entscheidereinheiten (23, 23') vorgesehen ist.

20. Sensoranordnung (1) nach Anspruch 19, **dadurch gekennzeichnet, dass** jedem KI-Verarbeitungsalgorithmus (212, 222) eine Entscheidereinheit (23, 23') zugeordnet ist.

21. Sensoranordnung (1) nach einem der Ansprüche 7 bis 20, **dadurch gekennzeichnet, dass** die KI-Algorithmen der Vorverarbeitungseinheiten (213, 223) durch Modellbildungen verifiziert werden, indem Modellausgangsgrößen mit den Vorverarbeitungseinheiten (213, 223) zugeführten Sensorsignalen verglichen werden.

22. Sensoranordnung (1) nach einem der Ansprüche 7 bis 21, **dadurch gekennzeichnet, dass** die KI-Verarbeitungsalgorithmen (212, 222) durch Modellbildungen gegen die Sensorsignale oder gegen die in den Vorverarbeitungseinheiten (213, 223) generierten Eingabedaten verifiziert werden.

**23.** Sensoranordnung (1) nach einem der Ansprüche 7 bis 22, **dadurch gekennzeichnet, dass** durch Auswertung von in den Vorverarbeitungseinheiten (213, 223) generierten Eingabedaten ein Vertrauensmaß für den j eweiligen KI-Verarbeitungsalgorithmus (212, 222) bestimmt wird.

**24.** Sensoranordnung (1) nach einem der Ansprüche 21 bis 23, **dadurch gekennzeichnet, dass** aus Verifikationsergebnissen und/oder aus dem berechneten Vertrauensmaß ein Gesamtvertrauensmaß bestimmt wird.

**25.** Sensoranordnung (1) nach Anspruch 24, **dadurch gekennzeichnet, dass** die Verifikationsergebnisse, das Vertrauensmaß und/oder das Gesamtvertrauensmaß an eine externe Einheit ausgegeben werden.

**26.** Sensoranordnung (1) nach einem der Ansprüche 24 oder 25, **dadurch gekennzeichnet, dass** das Gesamtvertrauensmaß mit einem Mindestvertrauensmaß verglichen wird, und dass eine Signalabgabe erfolgt, wenn das Gesamtvertrauensmaß das Mindestvertrauensmaß unterschreitet.

**27.** Sensoranordnung (1) nach einem der Ansprüche 7 bis 26, **dadurch gekennzeichnet, dass** Mittel zur Überwachung der KI-Verarbeitungsalgorithmen (212, 222) und/oder KI-Algorithmen vorgesehen sind.

**28.** Sensoranordnung (1) nach Anspruch 27, **dadurch gekennzeichnet, dass** die Mittel zur Überwachung ausgebildet sind um Prüfnummern über Gewichtungsparameter der KI-Verarbeitungsalgorithmen (212, 222) und/oder KI-Algorithmen zu bilden.

**29.** Sensoranordnung (1) nach Anspruch 28, **dadurch gekennzeichnet, dass** die Prüfsummen mit vorbestimmten Werten verglichen werden.

**30.** Sensoranordnung (1) nach einem der Ansprüche 28 oder 29, **dadurch gekennzeichnet, dass** bei einer mehrkanaligen Ausführung der KI-Verarbeitungsalgorithmen (212, 222) und/oder KI-Algorithmen die Prüfsummen für die einzelnen Kanäle miteinander verglichen werden.

**31.** Verfahren zum Betrieb einer Sensoranordnung (1) mit wenigstens einem Sensor (2) zur Erfassung von Objekten in einem Überwachungsbereich, **dadurch gekennzeichnet, dass** abhängig von Sensorsignalen des wenigstens einen Sensors (2) wenigstens zwei diversitäre, voneinander unabhängige Eingabedaten erhalten oder generiert werden und jeweils einer Verarbeitungseinheit mit einem KI(Künstliche Intelligenz)-Verarbeitungsalgorithmus (212, 222) zugeführt sind, und dass in den Verarbeitungseinheiten generierte Verarbeitungsergebnisse zu einem ein Ausgangssignal der Sensoranordnung (1) bildenden Gesamtergebnis verknüpft werden.

**Claims**

**1.** A sensor assembly (1) with at least one sensor (2) for detecting objects in a monitoring area, **characterised in that** at least two diverse, mutually independent input data are received or generated as a function of sensor signals from the at least one sensor (2) and are each supplied to a processing unit with an AI (artificial intelligence) processing algorithm (212, 222), and **in that** processing results generated in the processing units are combined to form an overall result forming an output signal of the sensor assembly (1).

**2.** A sensor assembly (1) according to claim 1, **characterised in that** this is a safety sensor assembly which is designed to monitor a danger zone (5) on a system (3).

**3.** A sensor assembly (1) according to claim 2, **characterised in that** it generates a safety function for the system (3) as an output signal when an object intervention in the danger zone (5) is registered.

**4.** A sensor assembly (1) according to one of claims 1 to 3, **characterised in that** sensor signals from different sensors (2, 2a, 2b) form different input data.

**5.** A sensor assembly (1) according to one of claims 1 to 4, **characterised in that** sensors (2, 2a, 2b) in the form of radar sensors, ultrasonic sensors or optical sensors are provided.

**6.** A sensor assembly (1) according to claim 5, **characterised in that** sensors (2, 2a, 2b) are designed in the form of camera sensors or area distance sensors.

**7.** A sensor assembly (1) according to one of claims 1 to 6, **characterised in that** sensor signals are pre-processed under different criteria in pre-processing units (213, 223), whereby different input data are generated.

**8.** A sensor assembly (1) according to claim 7, **characterised in that** different parameters are derived from the sensor signals in the pre-processing units (213, 223).

**9.** A sensor assembly (1) according to claim 7, **characterised in that** different algorithms are provided in the pre-processing units (213, 223).

**10.** A sensor assembly (1) according to claim 9, **characterised in that** deterministic algorithms are provided in the pre-processing units (213, 223).

**11.** A sensor assembly (1) according to claim 9, **characterised in that** KI algorithms are provided in the pre-processing units (213, 223).

**12.** A sensor assembly (1) according to claim 11, **characterised in that** the KI algorithms use different learning criteria.

**13.** A sensor assembly (1) according to one of claims 1 to 12, **characterised in that** the KI processing algorithms (212, 222) and/or KI algorithms are formed by neural networks or by decision trees.

**14.** A sensor assembly (1) according to one of claims 1 to 3, **characterised in that** at least one decision unit (23) is provided, in which the overall result is generated as a function of the processing results of the KI processing algorithms (212, 222).

**15.** A sensor assembly (1) according to claim 14, **characterised in that** the processing results are logically linked in the decision unit (23).

**16.** A sensor assembly (1) according to claim 14, **characterised in that** the processing results are compared with one another in the decision unit (23).

**17.** A sensor assembly (1) according to claim 16, **characterised in that** the overall result is determined in the decision unit (23) by averaging the processing results.

**18.** A sensor assembly (1) according to one of claims 16 or 17, **characterised in that** a confidence level for the overall result is determined in the decision unit (23), which can be output as an additional output variable.

**19.** A sensor assembly (1) according to one of claims 14 to 18, **characterised in that** a multichannel arrangement of mutually monitoring decision units (23, 23') is provided.

**20.** A sensor assembly (1) according to claim 19, **characterised in that** a decision unit (23, 23') is assigned to each AI processing algorithm (212, 222).

**21.** A sensor assembly (1) according to one of claims 7 to 20, **characterised in that** the KI algorithms of the pre-processing units (213, 223) can be verified by modelling by comparing model output variables with sensor signals fed to the pre-processing units (213, 223).

**22.** A sensor assembly (1) according to one of claims 7 to 21, **characterised in that** the KI processing algorithms (212, 222) are verified by modelling against the sensor signals or against the input data generated in the pre-processing units (213, 223).

**23.** A sensor assembly (1) according to one of claims 7 to 22, **characterised in that** a confidence measure for the respective KI processing algorithm (212, 222) is determined by evaluating input data generated in the pre-processing units (213, 223).

**24.** A sensor assembly (1) according to one of claims 21 to 23, **characterised in that** an overall confidence measure is determined from verification results and/or from the calculated confidence measure.

**25.** A sensor assembly (1) according to claim 24, **characterised in that** the verification results, the confidence measure and/or the overall confidence measure are output to an external unit.

**26.** A sensor assembly (1) according to one of claims 24 or 25, **characterised in that** the overall confidence measure is compared with a minimum confidence measure, and **in that** a signal is emitted if the overall confidence measure falls below the minimum confidence measure.

**27.** A sensor assembly (1) according to any one of claims 7 to 26, **characterised in that** means for monitoring the KI processing algorithms (212, 222) and/or AI algorithms are provided.

**28.** A sensor assembly (1) according to claim 27, **characterised in that** the means for monitoring are designed to form check numbers via weighting parameters of the KI processing algorithms (212, 222) and/or KI algorithms.

**29.** A sensor assembly (1) according to claim 28, **characterised in that** the checksums are compared with predetermined values.

**30.** A sensor assembly (1) according to one of claims 28 or 29, **characterised in that** in a multichannel execution of the K1 processing algorithms (212, 222) and/or AI algorithms, the checksums for the individual channels are compared with each other.

**31.** A method for operating a sensor assembly (1) with at least one sensor (2) for detecting objects in a monitoring area, **characterised in that** at least two diverse, mutually independent input data are received or generated as a function of sensor signals from the at least one sensor (2) and are each supplied to a processing unit with an AI (artificial intelligence) processing algorithm (212, 222), and **in that** processing results generated in the processing units are combined to form an overall result forming an output signal of the sensor assembly (1).

## Revendications

1. Agencement de capteurs (1) comprenant au moins un capteur (2) pour détecter des objets dans une zone de surveillance, **caractérisé par le fait qu'**au moins deux données d'entrée différentes et mutuellement indépendantes sont reçues ou générées en fonction des signaux de capteur provenant d'au moins un capteur (2) et sont chacune fournies à une unité de traitement avec un algorithme de traitement AI (intelligence artificielle) (212, 222), et **par le fait que** les résultats de traitement générés dans les unités de traitement sont combinés pour former un résultat global constituant un signal de sortie de l'agencement de capteurs (1).

2. Agencement de capteurs (1) selon la revendication 1, **caractérisé par le fait qu'**il s'agit d'un agencement de capteurs de sécurité conçu pour surveiller une zone dangereuse (5) sur un système (3).

3. Agencement de capteurs (1) selon la revendication 2, **caractérisé en ce qu'**il génère une fonction de sécurité pour le système (3) en tant que signal de sortie lorsqu'une intervention d'objet dans la zone de danger (5) est enregistrée.

4. Agencement de capteurs (1) selon l'une des revendications 1 à 3, **caractérisé par le fait que** les signaux de capteurs provenant de différents capteurs (2, 2a, 2b) forment des données d'entrée différentes.

5. Agencement de capteurs (1) selon l'une des revendications 1 à 4, **caractérisé par** la présence de capteurs (2, 2a, 2b) sous forme de capteurs radar, de capteurs à ultrasons ou de capteurs optiques.

6. Agencement de capteurs (1) selon la revendication 5, **caractérisé par le fait que** les capteurs (2, 2a, 2b) sont conçus sous forme de capteurs de caméra ou de capteurs de distance de zone.

7. Agencement de capteurs (1) selon l'une des revendications 1 à 6, **caractérisé par le fait que** les signaux des capteurs sont prétraités selon différents critères dans les unités de prétraitement (213, 223), ce qui permet de générer des données d'entrée différentes.

8. Agencement de capteurs (1) selon la revendication 7, **caractérisé par le fait que** différents paramètres sont dérivés des signaux du capteur dans les unités de prétraitement (213, 223).

9. Agencement de capteurs (1) selon la revendication 7, **caractérisé par le fait que** différents algorithmes sont fournis dans les unités de prétraitement (213, 223).

10. Agencement de capteurs (1) selon la revendication 9, **caractérisé par le fait que** des algorithmes déterministes sont fournis dans les unités de prétraitement (213, 223).

11. Agencement de capteurs (1) selon la revendication 9, **caractérisé par le fait que** les algorithmes KI sont fournis dans les unités de prétraitement (213, 223).

12. Agencement de capteurs (1) selon la revendication 11, **caractérisé par le fait que** les algorithmes KI utilisent des critères d'apprentissage différents.

13. Agencement de capteurs (1) selon l'une des revendications 1 à 12, **caractérisé par le fait que** les algorithmes de traitement KI (212, 222) et/ou les algorithmes KI sont formés par des réseaux neuronaux ou par des arbres de décision.

14. Agencement de capteurs (1) selon l'une des revendications 1 à 3, **caractérisé par** la présence d'au moins une unité de décision (23) dans laquelle le résultat global est généré en fonction des résultats de traitement des algorithmes de traitement KI (212, 222).

15. Agencement de capteurs (1) selon la revendication 14, **caractérisé par le fait que** les résultats du traitement sont liés logiquement dans l'unité de décision (23).

16. Agencement de capteurs (1) selon la revendication 14, **caractérisé par le fait que** les résultats du traitement sont comparés les uns aux autres dans l'unité de décision (23).

17. Agencement de capteurs (1) selon la revendication 16, **caractérisé par le fait que** le résultat global est déterminé dans l'unité de décision (23) en calculant la moyenne des résultats du traitement.

18. Agencement de capteurs (1) selon l'une des revendications 16 ou 17, **caractérisé par le fait que** l'unité de décision (23) détermine un niveau de confiance pour le résultat global, qui peut être émis en tant que variable de sortie supplémentaire.

19. Agencement de capteurs (1) selon l'une des revendications 14 à 18, **caractérisé par** la présence d'un dispositif multicanal d'unités de décision (23, 23') se surveillant mutuellement.

**20.** Agencement de capteurs (1) selon la revendication 19, **caractérisé par le fait qu'**une unité de décision (23, 23') est affectée à chaque algorithme de traitement de l'IA (212, 222).

**21.** Agencement de capteurs (1) selon l'une des revendications 7 à 20, **caractérisé par le fait que** les algorithmes KI des unités de prétraitement (213, 223) peuvent être vérifiés par modélisation en comparant les variables de sortie du modèle avec les signaux de capteur envoyés aux unités de prétraitement (213, 223).

**22.** Agencement de capteurs (1) selon l'une des revendications 7 à 21, **caractérisé par le fait que** les algorithmes de traitement KI (212, 222) sont vérifiés par modélisation par rapport aux signaux du capteur ou aux données d'entrée générées dans les unités de prétraitement (213, 223).

**23.** Agencement de capteurs (1) selon l'une des revendications 7 à 22, **caractérisé par le fait qu'**une mesure de confiance pour l'algorithme de traitement KI respectif (212, 222) est déterminée en évaluant les données d'entrée générées dans les unités de prétraitement (213, 223).

**24.** Agencement de capteurs (1) selon l'une des revendications 21 à 23, **caractérisé par le fait qu'**une mesure de confiance globale est déterminée à partir des résultats de la vérification et/ou de la mesure de confiance calculée.

**25.** Agencement de capteurs (1) selon la revendication 24, **caractérisé par le fait que** les résultats de la vérification, la mesure de confiance et/ou la mesure de confiance globale sont transmis à une unité externe.

**26.** Agencement de capteurs (1) selon l'une des revendications 24 ou 25, **caractérisé en ce que** la mesure de confiance globale est comparée à une mesure de confiance minimale, et **en ce qu'**un signal est émis si la mesure de confiance globale est inférieure à la mesure de confiance minimale.

**27.** Agencement de capteurs (1) selon l'une des revendications 7 à 26, **caractérisé par** des moyens de contrôle des algorithmes de traitement KI (212, 222) et/ou des algorithmes d'intelligence artificielle.

**28.** Agencement de capteurs (1) selon la revendication 27, **caractérisé par le fait que** les moyens de surveillance sont conçus pour former des nombres de contrôle par le biais de paramètres de pondération des algorithmes de traitement KI (212, 222) et/ou des algorithmes KI.

**29.** Agencement de capteurs (1) selon la revendication 28, **caractérisé par le fait que** les sommes de contrôle sont comparées à des valeurs prédéterminées.

**30.** Agencement de capteurs (1) selon l'une des revendications 28 ou 29, **caractérisé par le fait que** lors de l'exécution multicanal des algorithmes de traitement KI (212, 222) et/ou des algorithmes AI, les sommes de contrôle des différents canaux sont comparées les unes aux autres.

**31.** Procédé de fonctionnement d'un agencement de capteurs (1) comprenant au moins un capteur (2) pour détecter des objets dans une zone de surveillance, **caractérisée par le fait qu'**au moins deux données d'entrée différentes et mutuellement indépendantes sont reçues ou générées en fonction des signaux de capteurs provenant d'au moins un capteur (2) et sont chacune fournies à une unité de traitement avec un algorithme de traitement AI (intelligence artificielle) (212, 222), et **par le fait que** les résultats de traitement générés dans les unités de traitement sont combinés pour former un résultat global formant un signal de sortie du agencement de capteurs (1).

## Fig. 1

## Fig. 2

**Fig. 3**

EP 4 098 927 B1

# Fig. 4

# Fig. 5

# Fig. 6

# Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1418380 A1

- DE 102017218917 A1